Europäisches Patentamt

European Patent Office

Office européen des brevets

(19)

(11) Numéro de publication: **0 121 639**
**A1**

(12) ## DEMANDE DE BREVET EUROPEEN

(21) Numéro de dépôt: **83810143.4**

(22) Date de dépôt: **11.04.83**

(51) Int. Cl.³: **C 04 B 7/14**

(43) Date de publication de la demande: **17.10.84**
**Bulletin 84/42**

(71) Demandeur: **Stoica, Constantin, Dr., 3D rue de Moillebeau, CH-1209 Genève (CH)**

(84) Etats contractants désignés: **AT BE CH DE FR GB IT LI LU NL SE**

(72) Inventeur: **Stoica, Constantin, Dr., 3D rue de Moillebeau, CH-1209 Genève (CH)**

(54) **Récupération de l'énergie calorique de la scorie fondue lors de la fabrication du ciment.**

(57) Les scories fondues provenant des industries sidérurgiques, métallurgiques, ferreuses, non ferreuses, naturelles etc. peuvent être utilisées dans l'industrie du ciment, en récuperant l'énergie calorique des scories fondues.

EP 0 121 639 A1

## II. LA DESCRIPTION

Titre . La récuperation de l'énergie calorique de la scorie fondue des hauts fourneaux, par des processus nouveaux, pour la fabrication du ciment (P), de la ouate minérale, des scories poreuses ou d'autres objets, matériaux de construction, etc.

La scorie fondue, fluide incandescente est évacuée des hauts fourneaux sidérurgiques ou métalurgiques a la température de I400-I450 °C. dans de grands pots réfractaires, qui transportent et déchargent la scorie fondue,dans des endroits spécialement emménagés pour les déchets, qui occupent une grande surface de terrain et céent ainsi des problèmes assez difficiles pour l'usine.

A ma connaissance, actuellement, dans l'industrie courante, on ne pratique pas la récuperation de l'énergie calorique des scories fondues (provenant des hauts fourneaux sidérurgiques ou d'Autres fours, des industries métalurgiques ferreuses ou non ferreuses etc.) pour la fabrication du ciment (P), de la ouate minérale, des scories poreuses ou d'autres objets, matériaux de construction etc.

La nouveauté dans cette invention caractérisée en ce qu'elle comporte la récuperation de l'énergie calorique des scories fondues et de nouveaux processus (en comparaison à des processus connus) pour la fabrication du ciment (P), de la ouate minérale, des scories poreuses ou d'autres objets, matériaux de construction etc. en tenant compte des suivantes considérations :

- la composition chimique des scories

- la température élevée (I400-I450°C) de la scorie fondue fluide à l'évacuation du haut fourneau.

- la possibilité de faire les corrections nécessaires à la composition chimique.

- l'utilisation de la scorie qui est un déchet en grande quantité.

-2-

Ex. : La composition chimique des scories, du ciment (P) et de la ouate minérale, se trouve dans les limites suivantes :

| Components % pour : | La scorie | Le ciment | La ouate minérale |
|---|---|---|---|
| SiO2 | 35,0-40,0 | 20,0- 25,6 | 30,0- 32,0 |
| FeO | I,0- I,5 | ------- | I,0 |
| F2O3 | ------ | 2,7- 5,5 | ------ |
| MnO | o,5- I,0 | ------- | ------ |
| Al2O3 | 5,0- 8,0 | 3,3- 6,0 | 8,0- I0,0 |
| CaO | 40,0-45,0 | 62,0- 64,0 | 35,0- 40,0 |
| MgO | 3,5- 5,0 | I,3- 2,9 | 20,0- 22,0 |
| S | 2,0- 2,5 | ------- | --- -- |
| SO4 | ------ | I,6- 2,3 | ------ |

Ex I) Processus pour la fabrication du ciment : la scorie fondue est déchargée dans un four spécial (four à bassin) où on peut maintenir ou même augmenter la température. Pour réaliser la composition chimique du ciment, on fait les corrections d'après les calculs analitiques en ajoutant les éléments nécessaires. Après l'omogénisation, la masse fluide s'écoule en jet et tombe sur un tambour qui la coupe en morceaux granulaires. Ces morceaux tombent dans un four rotatif, pour être refroidis, ensuite ils rentrent dans les étapes successives téchnologiques classiques de la fabrication du ciment ( moulinage - stockage etc.)

2) Processus pour la fabrication de la ouate minérale: la scorie fondue est déchargée dans un four spécial ( four à bassin) où on peut maintenir ou même élever la température. Pour réaliser la composition chimique de la ouate minérale, on fait les corrections d'après les calculs analytiques, en ajoutant les éléments nécessaires. Après l'omgénisation, la masse fluide s'écoule en jet en suivant les étapes technologiques pour la fibrilisation des fibres minerales, dans les instalations pour la fabrication de la ouate minerale, utilisée à l'isolation thermo- phono dans les constructions.etc.

3) Processus pour la fabrication des scories poreuses: la scorie fondue est déchargée directement des pots, en jet dirigée dans

-3-

un four rotatif, specialement construit dans lequel on insuffle alternativement de l'air et de l'eau. La scorie brusquement refroidie devient poreuse et se casse en morceaux de diverses dimensions. A la sortie de ce fourneau rotatif, on recupère la scorie granulée en petits morceaux ainsi que les vapeurs d'eau qui sont dirigés séparement par un ventilateur exhausteur dans des tuyaux vers la centrale thermique ou aux condensateurs, (d'après les besoins de l'usine) et les granulés dans le dépôt.

Les scories poreuses sont utilisées pour les isolationsthermiques et acoustiques, pour des bétons légers ou des panneaux préfabriqués, traitements acoustiques etc.

Les avantages technico-économiques de ces processus et produits matériaux, objets, etc. sont les suivants :

- économie d'énergie et de combustible pour la fabrication, par la récuperation de la chaleur de la scorie fondue,

- économie de matières premières, de l'exploitation des carrières, des transports, de la preparation des matières premières, etc.

- la valorification des déchets en grande quantité,

- la reduction du prix de la production des produits.

Note: La composition chimique des produits (clincker- ciment- Portland etc.) a obtenir des scories a l'état fondue se realise selon les calculs analytiques concernant chaque produit, en ajoutant les éléments nécessaires : soit directement, en même temps que les matières premières, dans les fourneaux - si la technologie le permet, en raison de la presence de certains fondants etc. - soit au fur et à mesure dans les pots d'évacuation, outillages, instalations etc. adéquates (ex: four à bassin, four rotatif, à écoulement, à jet, continu, discontinu, verticales, horizontales &c) indiqués par l'usage a realiser les mélanges et l'homogénéité.

-1-

I. R E V E N D I C A T I O N S :

I) La récuperation de l'énergie calorique de la scorie fondue des hauts fourneaux pour la fabrication du ciment (P), de la ouate minérale, des scories poreuses ou d'autres objets etc., caractérisée par l'utilisation directe de la chaleur des scories fondues provenant des hauts fourneaux sidérurgiques ou d'autres fours métalurgiques non ferreux etc., pour la fabrication de divers matériaux de construction, divers objets etc.

2) En référence avec la revendication I, caracterisée par le processus nouveau pour la fabrication du ciment (P) en utilisant les scories fondues comme matières premières.

3) En référence avec la revendication I, caracterisée par le processus nouveau pour la fabrication de la ouate minérale en utilisant les scories fondues comme matières premières.

4) En référence avec la revendication I, caracterisée par des processus nouveaux pour la fabrication de divers matériaux de con - struction tels que scories poreuses, tuyaux, dalles, briques ou d'autres objets de diverses formes artistiques, statues etc. caractérisés en ce qu'ils comportent l'utilisation des scories fondues.

0121639

Office européen
des brevets

**RAPPORT DE RECHERCHE EUROPEENNE**

Numéro de la demande

EP 83 81 0143

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (Int. Cl. ³) |
| X | BE-A- 868 430 (CENTRE DE RECHERCHES METALLURGIQUES) * Page 8; revendications 1,19 * | 1-3 | C 04 B 7/14 |
| X | BE-A- 878 263 (CENTRE DE RECHERCHES METALLURGIQUES) * Revendication unique * | 1-3 | |
| X | BE-A- 878 262 (CENTRE DE RECHERCHES METALLURGIQUES) * Revendications 1-3 * | 1-3 | |
| X | BE-A- 867 392 (CENTRE DE RECHERCHES METALLURGIQUES) * Revendication 1 * | 1-3 | |
| X | BE-A- 839 753 (CENTRE DE RECHERCHES METALLURGIQUES) * Revendication unique * | 1 | DOMAINES TECHNIQUES RECHERCHES (Int. Cl. ³) C 04 B |
| X | FR-A-2 370 408 (CENTRE DE RECHERCHES METALLURGIQUES) * Revendication 1 * | 1 | |

Le présent rapport de recherche a été établi pour toutes les revendications

| Lieu de la recherche LA HAYE | Date d'achèvement de la recherche 17-11-1983 | Examinateur STANGE R.L.H |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82